# EUROPEAN PATENT SPECIFICATION

(11) **EP 3 196 648 B1**
(45) Date of publication and mention of the grant of the patent: **31.03.2021**
(21) Application number: 16152356.8
(22) Date of filing: 22.01.2016
(51) Int. Cl.: G01N 35/00, B01L 9/00, G01N 35/04

(54) **DEVICE FOR LIFTING A SAMPLE TUBE**
VORRICHTUNG ZUM HEBEN EINER PROBENRÖHRE
DISPOSITIF DE LEVAGE D'UN TUBE D'ÉCHANTILLON

(43) Date of publication of application: 26.07.2017
(73) Proprietor: Roche Diagnostics GmbH, 68305 Mannheim (DE); F. Hoffmann-La Roche AG, 4070 Basel (CH)
(72) Inventor: Jaeggi, Beat, 6015 Luzern (CH)
(74) Representative: Patentanwälte Ruff, Wilhelm, Beier, Dauster & Partner mbB

(56) References cited:
- EP-A2- 2 253 960
- WO-A1-83/00393
- CN-Y- 201 133 910
- JP-A- 2004 223 646
- US-A1- 2013 239 527
- US-B2- 6 871 566

## Description

### TECHNICAL FIELD AND PRIOR ART

The invention relates to a device for lifting a sample tube for use in a laboratory automation system. The invention further relates to a sample handling device and to laboratory automation system comprising a device for lifting a sample tube and/or a sample handling device.

A laboratory automation system comprises a number of pre-analytical, analytical and/or post-analytical stations, in which samples, for example blood, saliva, swab, urine and other specimens taken from the human body, are processed. It is generally known to provide sample tubes containing the samples. The sample tubes are also referred to as test tubes. For processing of the sample, the sample tubes are distributed to designated stations or operating positions of the laboratory automation system.

Several sample tubes can be placed in so-called racks for a handling. In an alternative distribution system, sample tubes are placed in an upright or vertical position in so called pucks having a retaining area for retaining one single sample tube.

For some pre-processing steps or processing steps, it is necessary to lift the sample tube from a transport or conveyance level. For example, EP 2 253 960 A1 discloses a device for lifting and centering individual sample tubes, in order to pierce a cap of a lifted sample tube or to enter an aspiration probe into the sample tube. A centering of the sample tube is achieved by passive chamfered surfaces provided at the device for piercing the cap or entering the aspiration probe.

WO 83/00393 A1 relates to an automatic chemical analyzer comprising elevation maintaining means mounted on the base of a transfer carousel having a plurality of recesses, in which sample tubes are accommodated. The elevation means comprises a horizontal base for supporting one sample tube at its bottom, which is vertically movable for lifting the sample tube, while the sample tube remains accommodated in the recess of the transfer carousel.

CN 201133910 Y and/or US 2013/0239527 A1 show clamping or gripping means for clamping or gripping sample tubes.

Further, cap opening systems are known. For example, US 6,871,566 shows a cap opening system for containers, in which, when a cap of a container is to be opened, a container body of the container is gripped by a container body holding apparatus to raise the container body upward. A top surface of the cap is detected as a reference surface when the cap interrupts an optical beam. Based on the height of the reference surface, the cap is positioned with respect to the cap handling apparatus. in which the cap is first grasped and then rotated.

### SUMMARY OF THE INVENTION

It is the object of the invention to provide a device for lifting a sample tube allowing for a precise positioning of sample tubes at a lifted operating position, which is simple in construction and robust in operation. It is further the object of the invention to provide a sample handling device and/or a laboratory automation system comprising such a device.

This object is solved by the device for lifting a sample tube with the features of claim 1, the sample handling device with the features of claim 12 and the laboratory automation system with the features of claim 13. Preferred embodiments are defined in the dependent claims.

According to a first aspect, a device for lifting a sample tube comprising a holder having holding elements for holding a sample tube is provided, wherein the holder is supported moveably in the vertical direction between a lower holder position and an upper holder position for lifting and lowering a held sample tube, which device further comprises a centering tool having a pair of centering jaws extending parallel to one another in a longitudinal direction, wherein by moving the holder into the upper position, a held sample tube is lifted into a position between the centering jaws, and wherein the centering jaws are moveable to approach each other relative to the lifted sample tube for centering the lifted sample tube with respect to a vertical central axis.

By closing the centering jaws, the sample tube is centered with respect to vertical axis at least in the direction perpendicular to the longitudinal direction of the centering jaws.

A drive system is provided, wherein the holder is moveable by the drive system at least from the lower holder position into the upper holder position, and wherein the centering jaws are moveable by means of the drive system relative to the lifted sample tube for centering the lifted sample tube with respect to a vertical central axis. In one embodiment, the holder is moved from the lower position into the upper position by means of the drive system and returned to the lower position by using gravitational forces and/or a return spring. In preferred embodiments, the to-and-fro movement of both the holder and the jaws is caused by the drive system.

The drive system comprises a first slide supported moveably in the vertical direction to-and-fro between a lower slide position and an upper slide position via a first intermediate slide position and second intermediate slide position, wherein the first slide interacts with the holder for moving the holder from the lower holder position into the upper holder position upon movement between the lower slide position and the first intermediate slide position and interacts with the centering tool for actuating the centering tool upon movement between the second intermediate slide position and the upper slide position. The device comprises a linkage system for converting a vertical movement of the first slide into a movement of the centering jaws towards and away from the lifted sample tube. In one embodiment, the second intermediate slide position is closer to the lower position than the first intermediate slide position, wherein the centering jaws start to approach each other before the sample tube is in the final lifted position.

In an embodiment, the opposing surfaces of the centering jaws are provided with recesses. The recesses in one embodiment is V-shaped, in other embodiments a recess in the form of a segment of a circle is provided. The recess allows the sample tubes during closing of the jaws to be centered in the direction parallel to longitudinal direction of the centering jaws.

In one embodiment, the jaws are moved in a horizontal plane for approaching each other and to part from each other. In preferred embodiments, the jaws are rigidly attached to a pair of pivotable tongs, in particular at a 90° angle to a pair of pivotable tongs arranged in a vertical plane, wherein the pivotable tongs are pivotable about a horizontal axis by applying a force in the vertical direction for causing the jaws to approach each other for centering the lifted sample tube with respect to the vertical central axis. Hence, for opening or closing the centering tool, the jaws are moved along a circular path in the vertical and horizontal direction.

In preferred embodiments, the first intermediate slide position coincides with the second intermediate slide position or is below the second intermediate position, so that upon the movement between the lower slide position and the coinciding intermediate position or the first intermediate position, the first slide only interacts with the holder for moving the holder from the lower holder position into the upper holder position, and upon the movement between the coinciding intermediate position or the second intermediate position and the upper holder position, the first slide only interacts with the centering tool for actuating the centering tool.

In a laboratory automation system, sample tubes of different diameters are processed. Therefore, a movement of the centering jaws is to be chosen to allow for a sufficient closure of the jaws to center the sample tubes having a small diameter and to avoid damaging of sample tubes having a larger diameter. In one embodiment, a spring loaded pressure pin is provided, wherein the drive system is drivingly coupled to the centering tool via the pressure pin and a motion transmission from the drive system to the centering tool is interrupted upon reaching a limit force. Hence, upon reaching the limit force, the centering jaws are no longer driven to approach each other, avoiding the damage of sample tubes having a larger diameter.

The drive system comprises in one embodiment a belt drive for driving the first slide.

The holder comprises in preferred embodiments a second slide supported moveably in the vertical direction, wherein in particular the first slide and the second slide are guide along a common guiding rail. Preferably, the first slide and the second slide are coupled by means of an elastically deformable element, in particular a spring element for a motion transmission. The elastically deformable element allows for an interruption of the motion transmission in case a limit is reached, wherein the first slide is moved relative to the second slide with a deformation of the elastically deformable element. A restoration force is chosen sufficiently large to avoid or limit a deformation when moving the holder from the lower position to the upper position under normal conditions.

Preferably, a stop is provided for limiting the upward movement of the holder. When the holder, in particular the second slide, abuts the stop, a force larger than the restoration force acts on the elastically deformable element and the motion of the first slide is no longer transmitted to the second slide.

The device in some embodiments is arranged at least partly underneath a horizontal plane, in which the sample tubes are conveyed. In one embodiment, the holder comprises a column, wherein the holding elements are provided at the upper end of the column.

The device is in particular suitable for laboratory automation systems using sample tube carriers retaining one single sample tube, so called pucks. Therefore, in one embodiment the holding elements are adapted for holding a carrier adapted for retaining a single sample tube.

According to a second aspect, a sample handling device comprising at least one conveyor device for conveying a sample tube to an operating position in a horizontal plane and a device for lifting the sample tube positioned at the operating position from the horizontal plane is provided. The sample tube is transferred in particular while being placed in a puck to an operation position and lifted at the operating position, for example for pipetting and/or for a handover of the sample tube to a second device. Various types of conveyor devices are conceivable, for example a belt conveyor, a screw conveyor, a star wheel conveyor, a conveyor device comprising a transport plane and a number of electro-magnetic actuators being stationary arranged below the transport plane, wherein the electro-magnetic actuators are adapted to move a sample tube carrier or combinations thereof.

According to a third aspect, a laboratory automation system with a number of pre-analytical, analytical and/or post-analytical stations, and with a device for lifting a sample tube and/or with a sample handling device is provided.

### BRIEF DESCRIPTION OF THE DRAWINGS

In the following, an embodiment of the invention is described in detail with reference to the drawings. Throughout the drawings, the same elements will be denoted by the same reference numerals.

The figures schematically show:
- Fig. 1: a perspective view of a first embodiment of a device for lifting sample tubes;
- Fig. 2: a perspective view of the device of Fig. 1 with a sample tube before lifting the sample tube;
- Fig. 3: a perspective view of the device of Fig. 1 with the sample tube during lifting of the sample tube;
- Fig. 4: a perspective view of the device of Fig. 1 with the sample tube during after lifting and centering of the sample tube;
- Fig. 5: a top view of a sample handling device comprising the device of Fig. 1.

### DETAILED DESCRIPTION OF EMBODIMENTS OF THE INVENTION

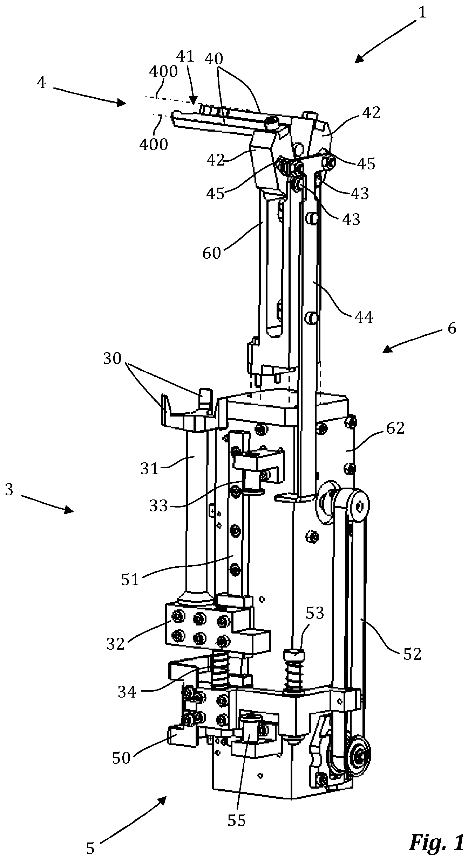

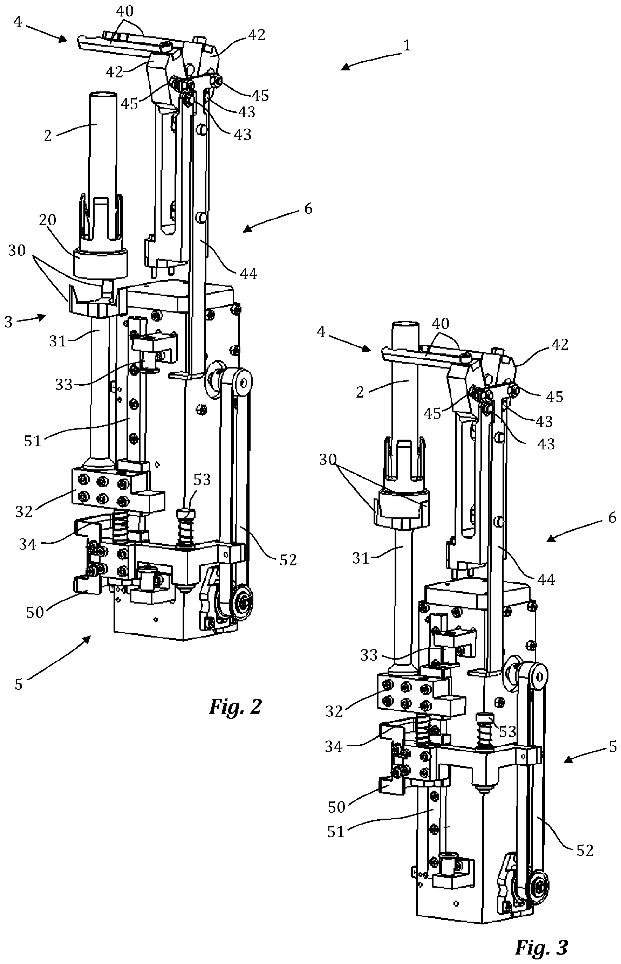

Fig. 1 shows in a schematic perspective view a device 1 for lifting a sample tube 2 (see Fig. 2. not shown in Fig. 1). The device 1 comprises a holder 3, a centering tool 4, a drive system 5 and pillar 6.

The pillar 6 comprises an upper element 60 and a lower element 62, which are connected fixed in position by means of a coupling element (indicated by broken lines in Fig. 1). The upper element 60 and the lower element 62 in one embodiment are connected fixed in position by means of a transport plane or a basis of a distribution system functioning as the coupling element. In other embodiments, the coupling element functions as a mounting component for the device 1. In still another embodiment, the upper element and the lower element are made in one part.

The centering tool 4 has a pair of centering jaws 40 extending parallel to one another in a longitudinal direction 400, wherein a sample tube placed between the centering jaws 40 is centered with respect to a vertical central axis in the direction perpendicular to the longitudinal direction 400 by moving the jaws 40 to approach each other, in other words by closing the centering jaws 40. The centering jaws 40 are provided at opposing surfaces with recesses 41 allowing for a centering of a sample tube also in a direction parallel to the longitudinal direction 400 of the centering jaws 40 upon closing the jaws 40.

The depicted centering tool 4 further is provided with a linkage system comprising a pair of pivotable tongs 42 arranged in a vertical plane, each pivotable tong 42 being at one end at a pivot joint 43 mounted pivotable about a horizontal axis to the upper element 60 of the pillar 6. The centering jaws 40 are rigidly attached to the other ends of the pivotable tongs 42, wherein the centering jaws 40 extend from the pivotable tongs 43 with their longitudinal direction 400 at a 90° angle to the vertical plane. The linkage system further comprises a rod 44 extending in the vertical direction and attached to the two tongs 42 at slotted holes 45. The rod 44 is movable in the vertical direction relative to the upper element 60. In one embodiment, the upper element 60 functions as a guiding element for the rod 44. By moving the rod 44 upwards, the pivotable tongs 42 are pivoted towards each other and the centering jaws 40 also approach each other moving along a circular path for centering a sample tube arranged between the centering jaws 40.

The drive system 5 comprises a first slide 50 slidingly mounted to the lower element 62 of the pillar 6 along a guide rail 51 and a belt drive 52 for driving the first slide 50. The first slide 50 contacts the rod 44 for a motion transmission via a spring loaded pressure pin 53 as will be explained in more detail below. A downward movement of the slide 50 is limited by a stop 55.

The holder 3 has holding elements 30 for holding a sample tube 2. In the depicted embodiment, the holding elements 30 are three fingers offset by 120°, wherein a sample tube 2 retained in a sample tube carrier 20 (see Fig. 2), which carrier 20 is adapted for receiving one single sample tube 2, is retained between the fingers.

The holder 3 further comprises a second slide 32 and a column 31 arranged on the second slide 32, wherein the holding elements 30 are provided at the free upper end of the column 31. The second slide 32 is also slidingly mounted to the lower element 62 of the pillar 6 along the guide rail 51. When moving the second slide 32 upwards, a sample tube 2 held by the holder 3, more particular by the holding elements 30, is lifted into a position, in which the upper end of the sample tube extends above the centering jaws 40 and a portion of the sample tube 2 is arranged between the centering jaws 40. The upwards movement of the second slide 32 is limited by means of a stop 33.

The second slide 32 is coupled to the first slide 50 for a motion transmission via a spring element 34. The spring element 34, more particular its restoration force, is configured such that initially upon moving the first slide 50 from a lower slide position shown in Fig. 1 upwards, the spring element 34 is not or only marginally deformed and the motion of the first slide 50 is transferred to the second slide 32. When reaching the stop 33, the second slide 32 is hindered from being moved further upwards, and unless the drive system 5 is stopped, the first slide 50 is moved relative to the second slide 32 under deformation of the spring element 34.

The operation of the device 1 is explained in more detail in the following with reference to Figs. 2 to 4.

As shown in Fig. 2, the sample tube 2 is retained in a carrier 20 and positioned for example by means of a conveyor device above the holder 3. A support plate or the like (not shown in Fig. 2) is provided for supporting the carrier 20 with the sample tube 2 in this position. For lifting the sample tube 2, the drive system 5 is operated to move the first slide 50 from the lower slide position shown in Fig. 2 upwards, wherein as shown in Fig. 3, the motion of the first slide 50 is transferred to the second slide 32 and the sample tube 2 is lifted such that its upper end extends above the centering jaws 40 and a portion of the sample tube 2 is positioned between the centering jaws 40.

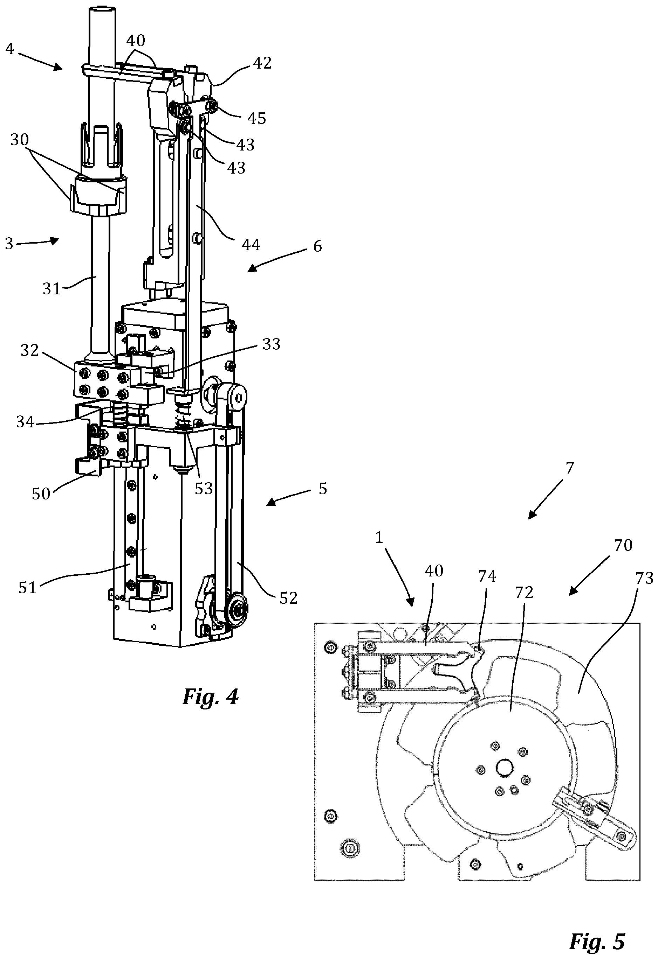

When the second slide 32 reaches the stop 33, as shown in Fig. 4, the motion is no longer transferred to the second slide 32 and the spring element 34 is compressed. The position of the first slide 50 when the second slide 32 reaches the limit stop 33 is referred to as first intermediate slide position.

Further, in the upward movement, the first slide 50 eventually contacts the rod 44 via the pressure pin 53 and the motion of the first slide 50 is transferred to the rod 44, thereby causing the centering jaws 40 to approach each other. The position of the first slide 50 when the pressure pin 53 contacts the rod 44 and the motion transmission to the centering tool 4 is started is referred to as second intermediate slide position. The first and the second intermediate position may coincide.

Sample tubes 2 of different sizes, i.e. different diameters and different lengths can be handled. Therefore, in order to avoid damaging of the sample tubes 2 differing in the diameter when closing the jaws 40, the spring loaded pressure pin 53 is provided. In case a counteracting force at the centering jaws 40 exceeds a threshold, the spring of the pressure pin 53 is compressed and a motion transmission from the first slide 50 to the rod 44 is stopped. Further, the distance between an upper end of the column 31 and, thus, a lower support area of the carrier 20 and the centering jaws 40 is chosen in order to ensure that an upper end of short sample tubes 2 reaches a position in which it is arranged between the centering jaws 40, when the second slide 32 reaches the limit stop 33. As can be seen in Fig. 4, a sample tube 2 having an average length is contacted by the centering jaws 40 at a middle region upon centering.

Fig. 5 is a top view of a sample handling device 7 comprising the device 1 shown in Figs. 1 to 4. The sample handling device 7 shown in Fig. 5 comprises a carousel 70, with a rotating disc 72, wherein carriers 20 (not shown in Fig. 5) retaining sample tubes 2 or empty carriers 20 can be conveyed to operating stations by a rotation of the disc 72. The holder 3 is in the lower position arranged underneath, a supporting plate 73 of the conveyor over which the carriers 20 are slidingly moved. As shown in Fig. 5, the supporting plate 73 is provided with a cutout 74 allowing the holder 3 of the device 1 to contact the carrier 20 when moved upwards. The centering tool 4 with the centering jaws 40 is arranged above the supporting plate 73.

In alternative or in addition to the carousel 70, the sample handling device 7 in one embodiment comprises a transport plane, wherein a number of electro-magnetic actuators are stationary arranged below the transport plane, and wherein the electro-magnetic actuators are adapted to move a sample tube carrier 20 together with a sample tube 2 or while empty on top of said transport plane by applying a magnetic force to said sample tube carrier 20. Such a system is described for example in WO 2013/064665 A1.

## Claims

1. A device for lifting a sample tube (2) comprising a holder (3) having holding elements (30) for holding a sample tube (2), a centering tool (4) having a pair of centering jaws (40) extending parallel to one another in a longitudinal direction, and a drive system (5), wherein the holder (3) is supported moveably in the vertical direction between a lower holder position and an upper holder position for lifting and lowering a held sample tube (2) and is moveable by the drive system (5) at least from the lower holder position into the upper holder position,
wherein by moving the holder (3) into the upper position, a held sample tube (2) is lifted into a position between the centering jaws (40), and
wherein the centering jaws are moveable by means of the drive system (5) to approach each other relative to the lifted sample tube (2) for centering the lifted sample tube (2) with respect to a vertical central axis, and
wherein the drive system comprises a first slide (50) supported moveably in the vertical direction to-and-fro between a lower slide position and an upper slide position via a first intermediate slide position and second intermediate slide position, wherein the first slide (50) interacts with the holder (3) for moving the holder (3) from the lower holder position into the upper holder position upon movement between the lower slide position and the first intermediate slide position and interacts with the centering tool (4) for actuating the centering tool (4) upon movement between the second intermediate slide position and the upper slide position..

2. The device according to claim 1, **characterized in that** opposing surfaces of the centering jaws (40) are provided with recesses (41).

3. The device according to claim 1 or 2, **characterized in that** the centering jaws (40) are rigidly attached to a pair of pivotable tongs (42), in particular at a 90° angle to a pair of pivotable tongs (42) arranged in a vertical plane, wherein the pivotable tongs (42) are pivotable about a horizontal axis by applying a force in the vertical direction for causing the centering jaws (40) to approach each other for centering the lifted sample tube 2 with respect to the vertical central axis.

4. The device according to any one of claims 1 to 3, **characterized in that** the first intermediate slide position coincides with the second intermediate slide position or is below the second intermediate position, so that upon the movement between the lower slide position and the coinciding intermediate position or the first intermediate position, the first slide (50) only interacts with the holder (3) for moving the holder (3) from the lower holder position into the upper holder position, and upon the movement between the coinciding intermediate position or the second intermediate position and the upper holder position, the first slide (50) only interacts with the centering tool (4) for actuating the centering tool (4).

5. The device according to any one of claims 1 to 4, **characterized in that** a spring loaded pressure pin (53) is provided, wherein the drive system is drivingly coupled to the centering tool (4) via the pressure pin and a motion transmission from the drive system (5) to the centering tool is interrupted upon reaching a limit force.

6. The device according to any one of claims 1 to 5, **characterized in that** the drive system (5) comprises a belt drive (52) for driving the first slide (50).

7. The device according to any one of claims 1 to 6, **characterized in that** the holder (3) comprises a second slide (32) supported moveably in the vertical direction, wherein in particular the first slide (50) and the second slide (32) are guide along a common guiding rail (51).

8. The device according to claim 7, **characterized in that** the first slide (50) and the second slide (32) are coupled by means of an elastically deformable element, in particular a spring element (34), for a motion transmission.

9. The device according to any one of claims 1 to 8, **characterized in that** a stop (33) is provided for limiting the upward movement of the holder (3).

10. The device according to any one of claims 1 to 9, **characterized in that** the holder (3) comprises a column (31), wherein the holding elements (30) are provided at the upper end of the column (31).

11. The device according to any one of claims 1 to 10, **characterized in that** the holding elements (30) are adapted for holding a carrier (20) adapted for retaining a single sample tube (2).

12. A sample handling device comprising at least one conveyor device (70) for conveying a sample tube (2) to an operating position in a horizontal plane and a device (1) according to any one of claims 1 to 11 for lifting the sample tube (2) positioned at the operating position from the horizontal plane.

13. Laboratory automation system with a number of pre-analytical, analytical and/or post-analytical stations, and with a device (1) according to any one of claims 1 to 11 and/or with a sample handling device (7) according to claim 12.

## Patentansprüche

1. Vorrichtung zum Heben eines Probenröhrchens (2), umfassend einen Halter (3) mit Halteelementen (30) zum Halten eines Probenröhrchens (2), ein Zentrierwerkzeug (4) mit einem Paar Zentrierbacken (40), die sich parallel zueinander in Längsrichtung erstrecken, und ein Antriebssystem (5), wobei der Halter (3) in vertikaler Richtung bewegbar zwischen einer unteren Halterposition und einer oberen Halterposition zum Anheben und Absenken eines gehaltenen Probenröhrchens (2) gelagert ist und durch das Antriebssystem (5) mindestens von der unteren Halterposition in die obere Halterposition bewegbar ist,
wobei durch Bewegen des Halters (3) in die obere Position ein gehaltenes Probenröhrchen (2) in eine Position zwischen den Zentrierbacken (40) gehoben wird, und
wobei die Zentrierbacken mittels des Antriebssystems (5) bewegbar sind, so dass sie sich relativ zum angehobenen Probenröhrchen (2) einander nähern, um das angehobene Probenröhrchen (2) in Bezug auf eine vertikale Mittelachse zu zentrieren, und
wobei das Antriebssystem eine erste Gleiteinrichtung (50) umfasst, die in vertikaler Richtung hin und her gehend zwischen einer unteren Gleitposition und einer oberen Gleitposition über eine erste Zwischengleitposition und eine zweite Zwischengleitposition bewegbar gelagert ist, wobei die erste Gleiteinrichtung (50) mit dem Halter (3) zusammenwirkt, um den Halter (3) von der unteren Halterposition in die obere Halterposition zu bewegen, wenn eine Bewegung zwischen der unteren Gleitposition und der ersten Zwischengleitposition erfolgt und mit dem Zentrierwerkzeug (4) zusammenwirkt, um das Zentrierwerkzeug (4) zu betätigen, wenn eine Bewegung zwischen der zweiten Zwischengleitposition und der oberen Gleitposition erfolgt.

2. Vorrichtung nach Anspruch 1, **dadurch gekennzeichnet, dass** gegenüberliegende Flächen der Zentrierbacken (40) mit Ausnehmungen (41) versehen sind.

3. Vorrichtung nach Anspruch 1 oder 2, **dadurch gekennzeichnet, dass** die Zentrierbacken (40) starr verbunden sind mit einem Paar verschwenkbarer Zangen (42), insbesondere um einem Winkel von 90° bei einem Paar verschwenkbarer Zangen (42), die in einer vertikalen Ebene angeordnet sind, wobei die verschwenkbaren Zangen (42) um eine horizontale Achse verschwenkbar sind durch Beaufschlagen mit einer Kraft in vertikaler Richtung, so dass die Zentrierbacken (40) veranlasst werden, sich einander anzunähern, um das angehobene Probenröhrchen (2) in Bezug auf die vertikale Mittelachse zu zentrieren.

4. Vorrichtung nach einem der Ansprüche 1 bis 3, **dadurch gekennzeichnet, dass** die erste Zwischengleitposition mit der zweiten Zwischengleitposition übereinstimmt oder unter der zweiten Zwischenposition liegt, so dass bei der Bewegung zwischen der unteren Gleitposition und der übereinstimmenden Zwischenposition oder der ersten Zwischenposition, die erste Gleiteinrichtung (50) nur mit dem Halter (3) zusammenwirkt, um den Halter (3) von der unteren Halterposition in die obere Halterposition zu bewegen, und bei der Bewegung zwischen der übereinstimmenden Zwischenposition oder der zweiten Zwischenposition und der oberen Halterposition, die erste Gleiteinrichtung (50) nur mit dem Zentrierwerkzeug (4) zusammenwirkt, um das Zentrierwerkzeug (4) zu betätigen.

5. Vorrichtung nach einem der Ansprüche 1 bis 4, **dadurch gekennzeichnet, dass** ein federbelasteter Druckstift (53) vorgesehen ist, wobei das Antriebssystem über den Druckstift mit dem Zentrierwerkzeug (4) antreibend gekoppelt ist, und eine Bewegungsübertragung vom Antriebssystem (5) zum Zentrierwerkzeug bei Erreichen einer Grenzkraft unterbrochen wird.

6. Vorrichtung nach einem der Ansprüche 1 bis 5, **dadurch gekennzeichnet, dass** das Antriebssystem (5) einen Riemenantrieb (52) zum Antreiben der ersten Gleiteinrichtung (50) umfasst.

7. Vorrichtung nach einem der Ansprüche 1 bis 6, **dadurch gekennzeichnet, dass** der Halter (3) eine zweite Gleiteinrichtung (32) umfasst, die in vertikaler Richtung bewegbar gelagert ist, wobei insbesondere die erste Gleiteinrichtung (50) und die zweite Gleiteinrichtung (32) entlang einer gemeinsamen Führungsschiene (51) geführt sind.

8. Vorrichtung nach Anspruch 7, **dadurch gekennzeichnet, dass** die erste Gleiteinrichtung (50) und die zweite Gleiteinrichtung (32) mittels eines elastisch verformbaren Elements, insbesondere eines Federelements (34), zur Bewegungsübertragung gekoppelt sind.

9. Vorrichtung nach einem der Ansprüche 1 bis 8, **dadurch gekennzeichnet, dass** ein Anschlag (33) zum Begrenzen der Aufwärtsbewegung des Halters (3) vorgesehen ist.

10. Vorrichtung nach einem der Ansprüche 1 bis 9, **dadurch gekennzeichnet, dass** der Halter (3) eine Säule (31) umfasst, wobei die Halteelemente (30) am oberen Ende der Säule (31) vorgesehen sind.

11. Vorrichtung nach einem der Ansprüche 1 bis 10, **dadurch gekennzeichnet, dass** die Halteelemente (30) ausgebildet sind zum Halten eines Trägers (20), der zum Aufnehmen eines einzelnen Probenröhrchens (2) ausgebildet ist.

12. Vorrichtung zur Handhabung von Proben, umfassend mindestens eine Fördereinrichtung (70) zum Befördern eines Probenröhrchens (2) zu einer Arbeitsposition in einer horizontalen Ebene und eine Vorrichtung (1) nach einem der Ansprüche 1 bis 11 zum Heben des Probenröhrchens (2), das an der Arbeitsposition positioniert ist, von der horizontalen Ebene.

13. Laborautomatisierungssystem mit einer Anzahl an Voranalyse-, Analyse- und/oder Nachanalysestationen und mit einer Vorrichtung (1) nach einem der Ansprüche 1 bis 11 und/oder mit einer Vorrichtung (7) zur Handhabung von Proben nach Anspruch 12.

## Revendications

1. Dispositif de levage d'un tube d'échantillon (2), comprenant un support (3) ayant des éléments de maintien (30) pour maintenir un tube d'échantillon (2), un outil de centrage (4) ayant une paire de mâchoires de centrage (40) s'étendant parallèlement l'une à l'autre dans une direction longitudinale, et un système d'entraînement (5), le support (3) étant supporté de manière mobile dans la direction verticale entre une position de support inférieure et une position de support supérieure pour lever et baisser un tube d'échantillon (2) maintenu et peut être déplacé par le système d'entraînement (5) au moins de la position de support inférieure à la position de support supérieure,
en déplaçant le support (3) dans la position supérieure, un tube d'échantillon (2) maintenu étant levé dans une position entre les mâchoires de centrage (40), et
les mâchoires de centrage étant mobiles au moyen du système d'entraînement (5) pour se rapprocher l'une de l'autre par rapport au tube d'échantillon (2) levé afin de centrer le tube d'échantillon (2) levé par rapport à un axe central vertical, et
le système d'entraînement comprenant une première glissière (50) supportée de manière mobile dans la direction verticale en va-et-vient entre une position de glissière inférieure et une position de glissière supérieure par l'intermédiaire d'une première position de glissière intermédiaire et d'une seconde position de glissière intermédiaire, la première glissière (50) interagissant avec le support (3) pour déplacer le support (3) de la position de support inférieure à la position de support supérieure lors du mouvement entre la position de glissière inférieure et la première position de glissière intermédiaire et interagissant avec l'outil de centrage (4) pour actionner l'outil de centrage (4) lors du mouvement entre la seconde position de glissière intermédiaire et la position de glissière supérieure.

2. Dispositif selon la revendication 1, **caractérisé en ce que** les surfaces opposées des mâchoires de centrage (40) sont pourvues d'évidements (41).

3. Dispositif selon la revendication 1 ou 2, **caractérisé en ce que** les mâchoires de centrage (40) sont fixées rigidement à une paire de pinces pivotantes (42), en particulier à un angle de 90° par rapport à une paire de pinces pivotantes (42) disposée dans un plan vertical, les pinces pivotantes (42) pouvant pivoter autour d'un axe horizontal en appliquant une force dans la direction verticale pour amener les mâchoires de centrage (40) à s'approcher l'une de l'autre afin de centrer le tube d'échantillon 2 levé par rapport à l'axe central vertical.

4. Dispositif selon l'une quelconque des revendications 1 à 3, **caractérisé en ce que** la première position de glissière intermédiaire coïncide avec la seconde position de glissière intermédiaire ou se trouve sous la seconde position intermédiaire, de sorte que lors du mouvement entre la position de glissière inférieure et la position intermédiaire coïncidente ou la première position intermédiaire, la première glissière (50) n'interagisse qu'avec le support (3) pour déplacer le support (3) de la position de support inférieure à la position de support supérieure, et lors du mouvement entre la position intermédiaire coïncidente ou la seconde position intermédiaire et la position de support supérieure, la première glissière (50) n'interagisse qu'avec l'outil de centrage (4) pour actionner l'outil de centrage (4).

5. Dispositif selon l'une quelconque des revendications 1 à 4, **caractérisé en ce qu'**il est fourni une broche de pression (53) chargée par ressort, le système d'entraînement étant accouplé en entraînement à l'outil de centrage (4) par l'intermédiaire de la broche de pression et une transmission de mouvement du système d'entraînement (5) à l'outil de centrage étant interrompue lorsqu'une force limite est atteinte.

6. Dispositif selon l'une quelconque des revendications 1 à 5, **caractérisé en ce que** le système d'entraînement (5) comprend un entraînement par courroie (52) pour entraîner la première glissière (50).

7. Dispositif selon l'une quelconque des revendications 1 à 6, **caractérisé en ce que** le support (3) comprend une seconde glissière (32) supportée de manière mobile dans la direction verticale, en particulier la première glissière (50) et la seconde glissière (32) étant guidées le long d'un rail de guidage (51) commun.

8. Dispositif selon la revendication 7, **caractérisé en ce que** la première glissière (50) et la seconde glissière (32) sont accouplées au moyen d'un élément élastiquement déformable, en particulier un élément à ressort (34), pour une transmission de mouvement.

9. Dispositif selon l'une quelconque des revendications 1 à 8, **caractérisé en ce qu'**une butée (33) est fournie pour limiter le mouvement ascendant du support (3).

10. Dispositif selon l'une quelconque des revendications 1 à 9, **caractérisé en ce que** le support (3) comprend une colonne (31), les éléments de maintien (30) étant fournis au niveau de l'extrémité supérieure de la colonne (31).

11. Dispositif selon l'une quelconque des revendications 1 à 10, **caractérisé en ce que** les éléments de maintien (30) sont conçus pour maintenir un support (20) conçu pour retenir un tube d'échantillon (2) unique.

12. Dispositif de manipulation d'échantillons comprenant au moins un dispositif de transport (70) pour transporter un tube d'échantillon (2) vers une position de fonctionnement dans un plan horizontal et un dispositif (1) selon l'une quelconque des revendications 1 à 11 pour lever du plan horizontal le tube d'échantillon (2) positionné dans la position de fonctionnement.

13. Système d'automatisation de laboratoire avec un certain nombre de stations pré-analytiques, analytiques et/ou post-analytiques, et avec un dispositif (1) selon l'une quelconque des revendications 1 à 11 et/ou avec un dispositif de manipulation d'échantillons (7) selon la revendication 12.
